# FASCICULE DE BREVET EUROPEEN

(11) **EP 1 987 652 B1**
(45) Date de publication et mention de la délivrance du brevet: **19.08.2009**
(21) Numéro de dépôt: 07731020.9
(22) Date de dépôt: 21.02.2007
(51) Int. Cl.: H04L 29/06, H04N 7/167

(54) **Procédé d'établissement d'une clé cryptographique entre une tête de réseau et un récepteur**
Verfahren und Vorrichtung zur Erstellung eines kryptografischen Schlüssels zwischen einem Netzkopf und einem Empfänger
Method and apparatus for establishing a cryptographic key between a network head and a receiver

(30) Priorité: 22.02.2006 FR 0601564
(43) Date de publication de la demande: 05.11.2008
(73) Titulaire: Viaccess, F-92057 Paris La Defense Cedex (FR)
(72) Inventeur: CARLES, Philippe, F-92190 Meudon (FR)
(74) Mandataire: Blot, Philippe Robert Emile
(86) Numéro de dépôt international: PCT/FR2007/000313
(87) Numéro de publication internationale: WO 2007/096522

(56) Documents cités:
- EP-A- 0 936 812
- WO-A-20/04008765

## Description

La présente invention concerne un procédé d'établissement d'une clé cryptographique, une tête de réseau et un récepteur pour ce procédé, et un procédé de transmission de signaux.

Il existe des procédés d'établissement d'une clé de session commune à une tête de réseau transmettant des signaux multimédias embrouillés et à un récepteur de ces signaux multimédias embrouillés. Le récepteur est typiquement apte à désembrouiller à l'aide d'un mot de contrôle les signaux multimédias embrouillés reçus.

La tête de réseau et le récepteur sont raccordés l'un à l'autre par l'intermédiaire d'un réseau de télécommunications dans lequel chaque boucle locale constituant la partie finale de chaque ligne d'abonné est identifiée de façon unique parmi l'ensemble des boucles locales par un identifiant de boucle locale. Le récepteur peut être raccordé à l'extrémité de l'une quelconque de ces boucles locales.

Une boucle locale est directement raccordée, d'un côté, à un point de terminaison du réseau situé dans les locaux de l'abonné du réseau et, de l'autre côté, à un répartiteur téléphonique qui permet de regrouper plusieurs boucles locales sur une seule voie de communication. Les répartiteurs sont reliés par l'intermédiaire de ces voies de communication à des centres de commutation connus sous le terme anglais de « Central Office ». Une définition plus précise du terme « boucle locale » peut être trouvée dans la littérature concernant les réseaux de télécommunication. Par exemple, le dictionnaire technique de France Telecom définit ainsi la boucle locale dans son réseau : la boucle locale est la partie comprise entre le client et le centre local de rattachement du réseau de France Telecom. On distingue trois zones essentielles : la partie « Branchement », la partie « Distribution » et la partie « Transport ».

La partie Branchement est la partie reliant les clients aux points de Concentration. Ces liaisons sont réalisées avec des câbles en cuivre de faible capacité.

Au-delà du point de concentration commence la partie « Distribution ». Des câbles de moyenne capacité relient les points de concentration à un sous-répartiteur.

En amont de la partie distribution, on découvre la partie « Transport ». Chaque sous-répartiteur se connecte à un répartiteur via un câble de forte capacité. Le répartiteur centralise les requêtes des sous-répartiteurs et transmet les informations que lui fournit le commutateur CAA (Commutateur à Autonomie d'Acheminement) d'abonnés. Les commutateurs à autonomie d'acheminement sont capables de mettre eux-mêmes les clients en relation.

Une définition de ce terme est également donnée dans la loi française. Ainsi, l'article L.32 (3°ter) du code des postes et des communications électroniques définit la boucle locale comme l'« installation qui relie le point de terminaison du réseau dans les locaux de l'abonné au répartiteur principal ou à tout autre installation équivalente d'un réseau de communications électroniques fixe ouvert au public ». Dans le cas d'un réseau téléphonique commuté, la boucle locale est une paire de cuivre torsadée, dénommée « boucle locale cuivre ». Par ailleurs, une sous-boucle locale cuivre correspond au tronçon de la boucle locale cuivre reliant l'abonné au sous-répartiteur.

On notera également que la boucle locale n'est pas nécessairement réalisée avec une paire torsadée de fils de cuivre mais peut aussi être réalisée par une liaison sans fil. Par ailleurs, la boucle locale n'inclut pas les liaisons filaires ou autres que l'abonné peut installer au-delà de la terminaison du réseau.

Les procédés existants d'établissement d'une clé de session comprennent souvent :
- une étape d'authentification du récepteur, et
- une phase de construction de la clé de session, cette phase étant complètement exécutée uniquement si le récepteur a été correctement authentifié lors de l'étape d'authentification.

L'étape d'authentification permet de s'assurer que le récepteur appartient bien à un utilisateur enregistré comme client de l'opérateur de la tête de réseau. Cet utilisateur licite est ici appelé abonné. Dans la suite de cette description, on appelle également « utilisateur illicite » un utilisateur qui tente de recevoir les signaux multimédias embrouillés sans avoir pour cela été enregistré comme client de l'opérateur de la tête de réseau.

Classiquement, les récepteurs comprennent un décodeur dans lequel est inséré ou intégré un processeur de sécurité, typiquement amovible tel qu'une carte à puce.

Les décodeurs d'un même opérateur de tête de réseau sont généralement identiques et seul un numéro de série, même s'il n'est pas systématiquement connu de l'opérateur, permet de distinguer un décodeur d'un autre. Les informations secrètes permettant d'identifier et d'authentifier un récepteur particulier sont enregistrées dans le récepteur, notamment dans le processeur de sécurité. Par exemple, EP 0 936 812 A1 décrit une méthode d'enregistrement sécurisé.

Aujourd'hui, il est souhaitable de concevoir des récepteurs qui puissent fonctionner comme les récepteurs existants mais qui n'utilisent aucun processeur de sécurité, qu'il soit amovible ou intégré dans le décodeur, qu'il soit réalisé par une solution logicielle ou par une solution matérielle.

Dans ce contexte, pour des questions de sécurité, il n'est pas possible d'enregistrer des informations secrètes d'authentification dans un récepteur avant même que ce récepteur ait été affecté à un abonné. Se pose alors le problème de comment réaliser l'étape d'authentification lors de l'établissement d'une clé de session lorsque le récepteur est dépourvu de processeur de sécurité et d'informations secrètes d'authentification.

L'invention vise à remédier à cet inconvénient en proposant un procédé d'établissement d'une clé de session qui comporte une phase préalable d'abonnement lors de laquelle un identifiant de la boucle locale à l'extrémité de laquelle le récepteur doit être raccordé est acquis, à partir d'informations fournies par un utilisateur souhaitant s'abonner, et dans lequel l'étape d'authentification comporte :
a) lors d'une connexion du récepteur à la tête de réseau par l'intermédiaire du réseau, une opération d'obtention automatique de l'identifiant de la boucle locale à l'extrémité de laquelle le récepteur est réellement raccordé pour établir cette connexion à la tête de réseau, à partir d'informations fournies par au moins un équipement du réseau raccordé à l'extrémité de la boucle locale opposée à celle à laquelle est raccordé le récepteur, et
b) une opération de vérification que l'identifiant obtenu lors de l'opération a) correspond à l'identifiant acquis lors de la phase d'abonnement afin d'authentifier le récepteur.

Les équipements du réseau raccordés à l'extrémité de la boucle locale sont difficilement accessibles et modifiables par un utilisateur quelconque, ce qui permet d'avoir un bon niveau de confiance dans l'authenticité de l'identifiant de boucle locale obtenu lors de l'opération a). Dès lors, vérifier que l'identifiant de la boucle locale, à l'extrémité de laquelle le récepteur est réellement raccordé, correspond effectivement à l'identifiant acquis lors de l'abonnement permet donc de s'assurer avec un bon niveau de confiance que le récepteur qui souhaite recevoir les signaux multimédias transmis par la tête de réseau est effectivement celui de l'abonné connu par l'opérateur comme associé à cette boucle locale. L'utilisation de l'identifiant de boucle locale permet donc d'authentifier le récepteur avec un bon niveau de confiance même si ce récepteur est dépourvu de processeur de sécurité et d'informations secrètes d'authentification.

Les modes de réalisation de ce procédé peuvent comporter une ou plusieurs des caractéristiques suivantes :
- les opérations a) et b) sont réitérées lors de chaque connexion du récepteur à la tête de réseau ;
- lors de la phase d'abonnement, la tête de réseau génère un code d'activation unique qui est associé dans la tête de réseau à l'identifiant acquis lors de la phase d'abonnement ; avant l'opération b), le récepteur dispose du code d'activation ; lors de l'établissement d'une connexion avec la tête de réseau, le récepteur transmet le code d'activation à la tête de réseau par l'intermédiaire du réseau ; et lors de l'opération b) la tête de réseau utilise le code d'activation reçu pour établir la correspondance entre l'identifiant acquis lors de la phase d'abonnement et l'identifiant de boucle locale obtenu lors de l'opération a) ;
- le code d'activation est généré par la tête de réseau et transmis au client, et le récepteur acquiert ce code d'activation par l'intermédiaire d'une interface homme/machine ;
- avant l'étape b) la tête de réseau et le terminal génèrent indépendamment l'un de l'autre les codes d'activation uniquement à partir d'au moins un identifiant du terminal connu à la fois du terminal et de la tête de réseau ;
- avant la phase de construction de la clé de session, le procédé comporte une phase d'activation lors de laquelle,soit le récepteur génère à l'aide d'un générateur aléatoire ou pseudo-aléatoire une paire de clés publique/privée K_{STB-pub/}K_{STB-priv} puis envoie uniquement la clé publique à la tête de réseau, soit la tête de réseau génère à l'aide d'un générateur aléatoire ou pseudo-aléatoire une paire de clés publique/privée K_{STB-pub/}K_{STB-priv} puis envoie cette paire de clés au récepteur ; et ensuite, lors de la phase de construction de la clé de session, la tête de réseau transmet au récepteur par l'intermédiaire du réseau des secrets chiffrés à l'aide de la clé publique K_{STB-pub} et le récepteur déchiffre ces secrets à l'aide de la clé privée K_{STB-priv}, ces secrets échangés entre la tête de réseau et le récepteur permettant d'établir la clé de session ;
- le générateur aléatoire ou pseudo-aléatoire est initialisé en outre à partir d'un identifiant unique du récepteur ;
- lors de la phase de construction de la clé de session, au moins un certificat cryptographique de la clé publique K_{STB-pub} est créé puis utilisé, et la création du certificat cryptographique de la clé K_{STB-pub} est soumise à la condition que l'opération b) soit réussie ;
- l'équipement du réseau fournissant lesdites informations permettant d'obtenir l'identifiant de la boucle locale est un serveur de localisation propre, à partir d'une adresse IP (Internet Protocol) affectée au récepteur pour se connecter à la tête de réseau, à retrouver l'identifiant de la boucle locale à l'extrémité de laquelle le récepteur est réellement raccordé pour établir la connexion.

Ces modes de réalisation du procédé présentent en outre les avantages suivants :
- réitérer les opérations a) et b) lors de chaque connexion empêche le « nomadisme », c'est-à-dire la possibilité de raccorder un récepteur à l'extrémité d'une autre boucle locale que celle qui a été déclarée lors de l'abonnement ;
- pouvoir générer la paire de clés K_{STB-pUb}/K_{STB-priv} dans le récepteur puis transmettre uniquement la clé publique K_{STB-pub} accroît la sécurité du procédé puisque seule la clé publique K_{STB-pub} est transmise sur le réseau ;
- pouvoir générer la paire de clés KSTB-pub/KSTB-priv dans la tête de réseau puis l'envoyer au récepteur permet de limiter la puissance de traitement nécessaire dans le récepteur ;
- l'utilisation du code d'activation permet d'empêcher qu'un utilisateur illicite vienne connecter son récepteur sur la ligne d'un abonné, car dans ce cas là l'utilisateur illicite ne connaît pas le code d'activation de sorte que l'étape d'authentification ne peut pas réussir ;
- initialiser le générateur aléatoire ou pseudo-aléatoire en utilisant l'identifiant unique du récepteur permet de garantir que deux récepteurs activés avec un même code d'activation ont une probabilité quasiment nulle de générer la même paire de clés publique/privée K_{STB-pub}/K_{STB-priv} ;
- l'utilisation d'un serveur de localisation propre à fournir l'identifiant de boucle locale auquel est réellement raccordé le récepteur à partir de l'adresse IP du récepteur simplifie la mise en oeuvre de ce procédé.

L'invention a également pour objet un récepteur de signaux multimédias embrouillés apte à établir une clé de session commune avec une tête de réseau transmettant les signaux multimédias embrouillés en mettant en oeuvre le procédé d'établissement ci-dessus, dans lequel le récepteur comporte une interface homme/machine et est apte à acquérir le code d'activation par l'intermédiaire de cette interface homme/machine et à transmettre ce code d'activation à la tête de réseau par l'intermédiaire du réseau.

L'invention a également pour objet un récepteur apte à générer indépendamment de la tête de réseau un code d'activation uniquement à partir d'un identifiant du récepteur connu à la fois du récepteur et de la tête de réseau.

Les modes de réalisation de ce récepteur peuvent comporter une ou plusieurs des caractéristiques suivantes :
- le générateur de clé du récepteur comporte un générateur aléatoire ou pseudo-aléatoire propre à générer la paire de clés publique/privée, et dans lequel le récepteur est uniquement apte à envoyer la clé publique à la tête de réseau ;
- le récepteur comporte un identifiant unique et le générateur est initialisable à partir de cet identifiant unique du récepteur.

L'invention a également pour objet une tête de réseau transmettant des signaux multimédias embrouillés, apte à établir une clé de session commune avec un récepteur de ces signaux multimédias embrouillés en mettant en oeuvre le procédé d'établissement d'une clé cryptographique ci-dessus, apte, lors d'une connexion du récepteur à la tête de réseau par l'intermédiaire du réseau, à obtenir automatiquement l'identifiant de la boucle locale à l'extrémité de laquelle le récepteur est réellement raccordé pour établir cette connexion, à partir d'informations fournies par au moins un équipement du réseau raccordé à l'extrémité de la boucle locale opposée à celle à laquelle est raccordé le récepteur, et apte à vérifier que l'identifiant obtenu correspond à l'identifiant acquis lors de la phase d'abonnement afin d'authentifier le récepteur.

Les modes de réalisation de cette tête de réseau peuvent comporter une ou plusieurs des caractéristiques suivantes :
- la tête de réseau est apte à obtenir l'identifiant de boucle locale et à vérifier que l'identifiant obtenu correspond à l'identifiant acquis lors de la phase d'abonnement à chaque connexion du récepteur à la tête de réseau ;
- la tête de réseau est apte à utiliser le code d'activation reçu pour établir la correspondance entre l'identifiant acquis lors de la phase d'abonnement et l'identifiant de boucle locale obtenu.

Enfin, l'invention a également pour objet un procédé de transmission de signaux multimédias embrouillés entre une tête de réseau émettant ces signaux multimédias embrouillés et un récepteur de ces signaux multimédias embrouillés, ce procédé comportant :
- une procédure d'établissement d'une clé de session conforme au procédé ci-dessus d'établissement d'une clé cryptographique de session, et
- une étape de chiffrement du mot de contrôle ou d'un message contenant le mot de contrôle, à l'aide de la clé de session établie, avant sa transmission de la tête de réseau vers le récepteur par l'intermédiaire du réseau.

L'invention sera mieux comprise à la lecture de la description qui va suivre, donnée uniquement à titre d'exemple non limitatif et faite en se référant aux dessins sur lesquels :
- la figure 1 est une illustration schématique d'un système de transmission de signaux multimédias embrouillés entre une tête de réseau et des récepteurs,
- les figures 2A et 2B sont un organigramme d'un procédé de transmission de signaux multimédias dans le système de la figure 1 nécessitant l'exécution d'une procédure d'établissement d'une clé de session,
- la figure 3 est un procédé de révocation d'un récepteur du système de la figure 1,
- la figure 4 est un organigramme d'un procédé de révocation d'une boucle locale dans le système de la figure 1,
- la figure 5 est un organigramme d'une variante du procédé des figures 2A et 2B pour la génération de la paire de clé privée/clé publique, et
- la figure 6 est un organigramme d'une autre variante du procédé des figures 2A et 2B pour la génération de la paire de clé privée/clé publique.

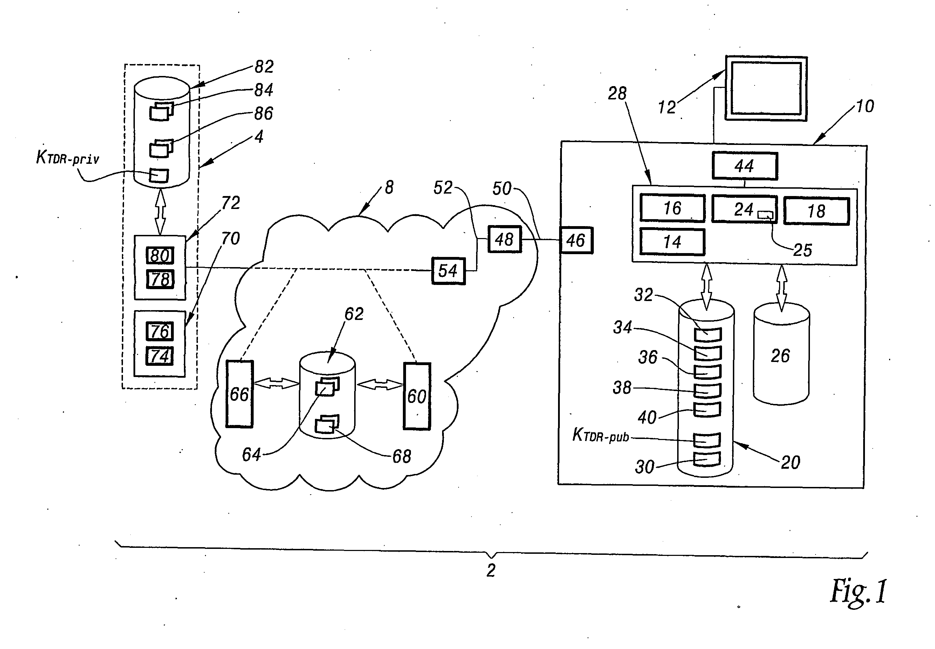

La figure 1 représente un système 2 de transmission de signaux multimédias embrouillés d'une tête de réseau 4 vers une multitude de récepteurs par l'intermédiaire d'un réseau 8 de télécommunication bidirectionnel.

Dans la suite de cette description, les caractéristiques et fonctions du système 2 bien connues de l'homme du métier ne sont pas décrites en détail.

De plus, pour simplifier la figure 1, seul un récepteur 10 a été représenté.

Les signaux multimédias sont, par exemple, des programmes audiovisuels ou des chaînes de télévision payantes.

Le récepteur 10 est apte à décoder et à désembrouiller les signaux multimédias reçus de manière à générer un signal audiovisuel décodé et désembrouillé affichable par un dispositif 12 d'affichage. Le dispositif 12 est ici un poste de télévision. Le dispositif 12 est directement raccordé au récepteur 10, par exemple, par l'intermédiaire d'une liaison filaire.

Le récepteur 10 comprend notamment :
- un désembrouilleur 14 propre à désembrouiller les signaux multimédias embrouillés à l'aide d'un mot de contrôle CW,
- un module 16 de chiffrement/déchiffrement apte, entre autre, à déchiffrer un cryptogramme CW* du mot de contrôle CW contenu dans un message ECM (Entitlement Control Message) transmis par la tête de réseau 4,
- un module 18 de calcul d'un identifiant unique STB-ID du récepteur 10 à partir d'informations enregistrées dans une mémoire ROM (Read Only Memory) 20, et
- un générateur 24 de clés cryptographiques.

Le générateur 24 comprend à cet effet un générateur aléatoire ou pseudo-aléatoire 25 apte à être initialisé à partir de l'identifiant STB-ID calculé par le module 18.

Le récepteur 10 comprend également la mémoire ROM (Read Only Memory) 20 ainsi qu'une mémoire non volatile réinscriptible 26. La mémoire 26 est, par exemple, une NVRAM (Non Volatil Random Access Memory).

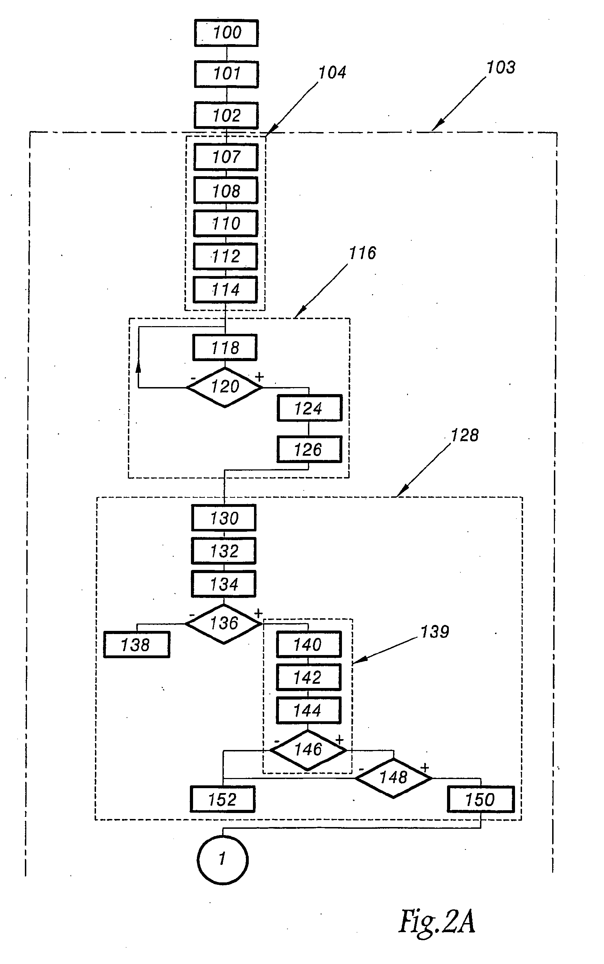

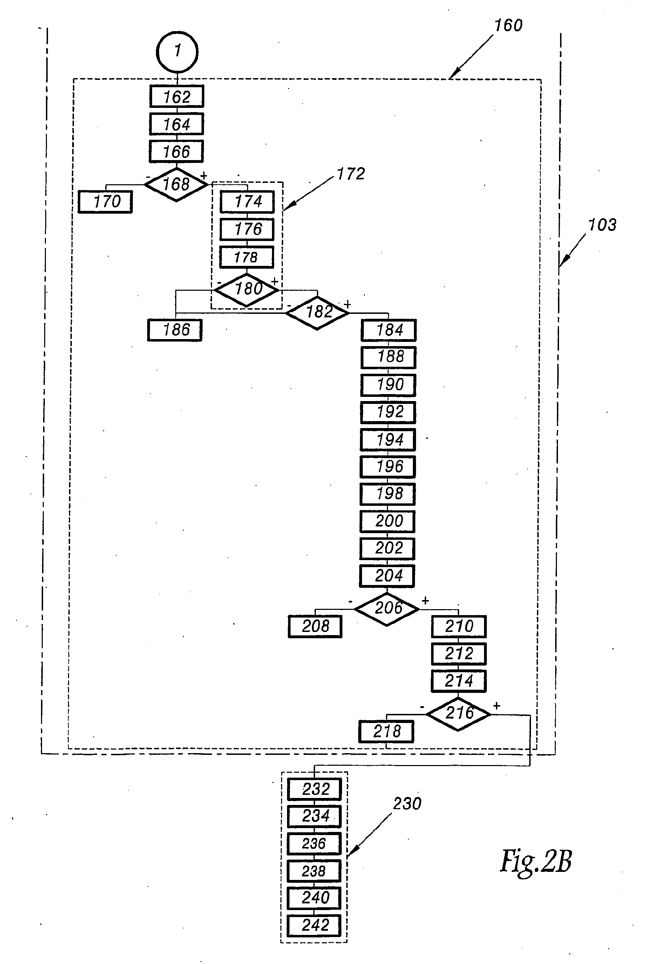

Le désembrouilleur 14, les modules 16 et 18 et le générateur 24 sont, par exemple, réalisés à partir d'un calculateur électronique programmable 28 apte à exécuter des instructions enregistrées dans la mémoire 20. A cet effet, la mémoire 20 comporte des instructions 30 pour l'exécution du procédé des figures 2A et 2B lorsque ces instructions sont exécutées par le calculateur 28.

La mémoire 20 comporte ici à titre d'illustration :
- un identifiant 32 de l'opérateur de la tête de réseau 4,
- un identifiant 34 du constructeur du récepteur 10,
- un identifiant 36 du modèle et du type du récepteur 10,
- un numéro de série 38, préférentiellement aléatoire,
- une adresse MAC (Media Access Control) 40, et
- une clé cryptographique publique K_{TDR-pub} permettant de chiffrer des informations destinées à être déchiffrées à l'aide d'une clé cryptographique privée K_{TDR-priv}, et permettant de vérifier la signature d'informations signées à l'aide de cette même clé privée.

On suppose ici que l'ensemble des récepteurs du système 2 sont tous du même type et du même modèle et ont tous été fabriqués par le même fabricant et sont tous gérés par le même opérateur de la tête de réseau 4, de sorte que les identifiants 32, 34 et 36 ainsi que les instructions 30 et la clé publique K_{TDR-pub} sont les mêmes dans chacun des récepteurs du système 2. Ainsi, un récepteur du système 2 ne diffère d'un autre récepteur du système 2 que par son numéro de série 38 et son adresse MAC 40.

Le récepteur 10 comprend aussi une interface homme/machine 44 permettant d'acquérir un code d'activation saisi par un utilisateur de ce récepteur.

Le récepteur 10 comprend également une prise 46 permettant de raccorder ce récepteur à un point de terminaison 48 du réseau 8 par l'intermédiaire d'une liaison 50. La liaison 50 peut être une liaison filaire conforme, par exemple, à la norme Ethernet ou une liaison sans fil conforme, par exemple, à la norme WiFi (Wireless Local Area Network). La liaison 50 peut également être réalisée à l'aide d'un réseau local privé. Cette liaison 50 privée ne fait pas partie de la boucle locale du réseau 8.

Le point de terminaison 48 est situé chez l'abonné. Dans le mode de réalisation décrit ici, ce point 48 est une prise téléphonique raccordée par l'intermédiaire d'une boucle locale 52 à un multiplexeur ou répartiteur 54 d'accès pour lignes d'abonnés numériques.

Le multiplexeur 54 est plus connu sous le terme de DSLAM (Digital Subscriber Line Access Multiplexer). Le multiplexeur 54 fait partie du réseau 8.

La ligne 52 est identifiée par un identifiant LINE-ID parmi l'ensemble des boucles locales connectées au réseau 8.

Par exemple, l'identifiant LINE-ID est construit à partir d'une, de plusieurs ou de la totalité des informations suivantes :
- identifiant du serveur BAS (Broadband Access Server) auquel est raccordé le multiplexeur 54,
- identifiant du multiplexeur 54,
- numéro de chemin virtuel (« Virtual path ») de la ligne en sortie du multiplexeur 54 conformément au standard ATM (Asynchronous Transfer Mode),
- numéro du chemin virtuel en entrée du serveur BAS conformément au standard ATM, et
- numéro du circuit virtuel (« Virtual Circuit ») de la boucle locale 52 en sortie du multiplexeur 54 conformément au standard ATM.

Le réseau 8 est ici un réseau à commutation de paquets. Par exemple, le réseau 8 est le réseau Internet plus connu sous le terme anglais de « World Wide Web ».

Pour permettre au récepteur 10 d'accéder au réseau Internet 8, ce réseau 8 comprend un fournisseur 60 d'accès à l'Internet réalisé à partir de serveurs informatiques. Ce fournisseur 60 est apte à affecter au récepteur 10 une adresse IP (Internet Protocol) permettant au récepteur 10 de naviguer sur le réseau 8. A cet effet, le fournisseur 60 est associé à une mémoire 62 contenant une base de données 64 dans laquelle, pour chaque abonné, sont stockées :
- l'adresse IP du récepteur utilisé pour naviguer sur le réseau 8, et
- des informations complémentaires sur l'abonné et notamment le numéro de téléphone affecté par l'opérateur du réseau 8 à la boucle locale 52.

Le numéro de téléphone permet à l'abonné de recevoir des appels téléphoniques par l'intermédiaire de la boucle locale 52 et de la prise 48.

Classiquement, le fournisseur 60 est placé en coupure de flux, c'est-à-dire que l'ensemble des flux d'informations échangés par l'intermédiaire de la boucle locale 52 traverse le ou les serveurs du fournisseur 60.

Le réseau 8 comprend également un serveur 66 de localisation propre à :
- retourner l'identifiant de boucle locale LINE-ID associé à un numéro de téléphone, et
- retourner l'identifiant de boucle locale LINE-ID associé à une adresse IP fournie par le fournisseur 60.

A cet effet, le serveur 60 est associé à la mémoire 62, cette mémoire 62 comporte également une base de données 68 associant à chaque numéro de téléphone, l'identifiant de boucle locale correspondant.

On notera qu'ici le multiplexeur 54, le fournisseur 60, le serveur de localisation 66 et la mémoire 62 sont considérés comme des équipements du réseau 8. Plus précisément, ces équipements sont raccordés à l'extrémité de la boucle locale 52 opposée à la terminaison 48. La tête de réseau 4 comprend :
- un émetteur 70 de signaux multimédias embrouillés, et
- un serveur 72 d'établissement d'une clé de session Kₛ propre à authentifier chaque récepteur et à construire une clé de session commune avec l'un quelconque des récepteurs du système 2.

L'émetteur 70 comprend notamment :
- un embrouilleur 74 propre à embrouiller les signaux multimédias à transmettre à l'aide du mot de contrôle CW, et
- un module 76 de chiffrement/déchiffrement propre, entre autre, à créer le cryptogramme CW* à partir du mot de contrôle CW utilisé par l'embrouilleur 74 avant de le transmettre dans un message ECM vers les récepteurs du système 2.

Le serveur d'établissement de clé 72 comprend un module d'authentification 78 de chaque récepteur qui souhaite recevoir les signaux multimédias embrouillés transmis par la tête de réseau 4 et un module 80 de calcul des identifiants STB-ID.

Le serveur 72 est raccordé à une mémoire 82 dans laquelle sont enregistrées :
- une base de données 84 contenant pour chaque récepteur du système 10 la valeur des identifiants 32 à 36, le numéro de série 38 et l'adresse 40,
- une base de données 86 contenant pour chaque boucle locale du système 52, un champ « LINE-ID » pour contenir l'identifiant LINE-ID acquis à partir d'informations fournies par l'utilisateur lors de son abonnement, un champ « STB-ID » pour recevoir l'identifiant STB-ID, un champ « CdA » pour recevoir un code d' activation, un champ « K_{STB} » pour enregistrer la paire de clés privée/publique K_{STB-priv/}K_{STB-pub}, un indicateur « session en cours » pour enregistrer le fait qu'une session est déjà en cours, un indicateur « récepteur révoqué » pour enregistrer le fait qu'un récepteur est révoqué et un indicateur « boucle locale révoquée » pour enregistrer le fait que la boucle locale LINE-ID est révoquée.

La mémoire 82 comprend également la clé privée K_{TDR-priv} permettant de déchiffrer des messages qui ont été chiffrés à l'aide de la clé publique K_{TDR-pub}, et permettant de signer des messages dont la signature sera vérifiée à l'aide de cette même clé publique.

Le fonctionnement du système 2 va maintenant être décrit en regard du procédé des figures 2A et 2B dans le cas particulier du récepteur 10.

Lors d'une étape 100, le fabricant du récepteur 10 stocke dans le récepteur et fournit à l'opérateur de réseau l'identifiant 32 de cet opérateur, son propre identifiant de constructeur 34, l'identifiant du modèle de récepteur 36, le numéro de série 38 et l'adresse MAC 40 du récepteur. Lors de cette étape, ces informations sont également enregistrées dans la base de données 84. En outre, lors de cette étape, le récepteur peut calculer son propre identifiant STB-ID avec le module 18 à partir des identifiants 32 à 40 et le mémoriser dans la mémoire 26.

Ensuite, lors d'une étape 101, le module 80 calcule à partir des informations contenues dans la base de données 84 l'identifiant STB-ID de chacun des récepteurs fabriqués et l'enregistre dans la base de données 84. Les étapes 100 et 101 constituent ainsi l'enregistrement par l'opérateur de chaque récepteur 10 fabriqué pour lui.

Après, le récepteur 10 est acquis par un utilisateur :
- soit indépendamment de l'opérateur (récepteur « non nominatif ») : dans ce cas l'opérateur ne connaît pas l'identifiant STB-ID de ce récepteur
- soit auprès de l'opérateur (récepteur « nominatif ») : dans ce cas l'opérateur connaît l'identifiant STB-ID (explicitement ou par le numéro de série) du récepteur attribué à cet utilisateur.

A ce stade là, lors d'une étape 102, cet utilisateur obtient un accès au réseau 8 souscrit auprès du fournisseur d'accès Internet 60. Lors de cette étape 102, le fournisseur 60 affecte une adresse IP à l'utilisateur qui lui permet de naviguer sur le réseau 8. Lors de la souscription de cet accès par l'utilisateur du récepteur 10, le fournisseur 60 associe dans la base de données 64 l'adresse IP, qu'il affecte au récepteur 10, au numéro de téléphone de cet utilisateur correspondant à la boucle locale 52. Selon les protocoles communément utilisés dans les réseaux de type IP, cette adresse IP affectée à l'utilisateur peut être statique ou dynamique comme lorsque le protocole DHCP (Dynamic Host Configuration Protocol, RFC1531 de IETF) est mis en oeuvre.

Ensuite, la tête de réseau 4 et le récepteur 10 exécutent une procédure 103 d'établissement d'une clé de session commune Kₛ. Cette procédure comporte une phase d'abonnement 104, une phase d'activation 116 hors connexion du récepteur, une phase d'activation 128 en ligne du récepteur et une phase de construction 160 de la clé de session.

Initialement, l'utilisateur du récepteur 10 procède à la phase d'abonnement 104.

Au début de la phase 104, le serveur 72 acquiert le numéro LINE-ID identifiant la boucle locale à l'extrémité de laquelle l'utilisateur souhaite raccorder le récepteur 10 à partir d'informations fournies par cet utilisateur.

Par exemple, lors d'une étape 107, le serveur 72 acquiert le numéro de téléphone correspondant à la boucle locale 52. Lors de l'étape 107, les informations fournies par l'utilisateur le sont vocalement, par courrier ou par courrier électronique, par exemple.

En outre, dans le cas où le récepteur 10 a été attribué à l'utilisateur par l'opérateur (récepteur nominatif), le serveur 72 acquiert également l'identification STB-ID de ce récepteur, par exemple à partir du numéro de série 38 que lui fournit l'utilisateur dans les informations que celui-ci communique.

Ensuite, lors d'une étape 108, le serveur 72 interroge le serveur 66 pour recueillir automatiquement l'identifiant LINE-ID de la boucle locale correspondant au numéro de téléphone acquis lors de l'étape 107. A partir de ce moment là, l'identifiant LINE-ID recueilli lors de l'étape 108 est enregistré dans le champ « LINE-ID » de la base de données 86 et utilisé en tant qu'identifiant de la boucle locale à l'extrémité de laquelle le récepteur 10 doit être raccordé. Dans le cas d'un récepteur nominatif, l'identifiant du récepteur STB-ID acquis lors de l'étape 107 est également enregistré dans la base de données 86 associé à cet identifiant LINE-ID. Dans le cas d'un récepteur non nominatif le champ « STB-ID » associé à l'identifiant LINE-ID est laissé vide jusqu'à l'étape 148 comme cela sera décrit ci-après.

Ensuite, lors d'une étape 110, le module d'authentification 78 génère un code d'activation unique. Ce code d'activation est constitué typiquement d'une valeur aléatoire associée à une redondance cryptographique qui permettra d'en vérifier l'intégrité et/ou l'authenticité quand il sera saisi par l'utilisateur, comme cela sera décrit ci-après. Ensuite, lors d'une étape 112, le code d'activation généré lors de l'étape 110 est enregistré dans la base de données 86 dans le champ « CdA » associé à l'identifiant LINE-ID recueilli lors de l'étape 108.

Lors d'une étape 114, le code d'activation généré lors de l'étape 110 est envoyé à l'utilisateur du récepteur 10 en utilisant, de préférence, un moyen de communication différent de celui utilisé par le récepteur 10 pour se connecter à la tête de réseau 4. Par exemple, le code d'activation est envoyé par courrier ou communiqué par téléphone à l'utilisateur du récepteur 10.

Une fois que l'utilisateur du récepteur 10 a reçu le code d'activation, celui-ci procède à une phase 116 d'activation hors connexion du récepteur 10.

Au début de la phase 116, lors d'une étape 118, le récepteur 10 acquiert le code d'activation que lui communique l'utilisateur par l'intermédiaire de l'interface homme /machine 44.

Le récepteur 10 vérifie en contrôlant la redondance cryptographique, lors d'une étape 120, l'intégrité et/ou l'authenticité du code d'activation acquis lors de l'étape 118.

Si le contrôle de la redondance cryptographique du code d'activation est négatif, alors le procédé retourne, par exemple, à l'étape 118 pour que l'utilisateur puisse saisir une nouvelle fois son code d'activation. Le nombre d'essais pour acquérir le code d'activation est, de préférence, limité de sorte que, lorsque cette limite est atteinte, plus aucun nouveau code d'activation ne peut être acquis à moins, par exemple, de réinitialiser le récepteur 10.

Si le contrôle de la redondance cryptographique du code d'activation est positif et si cela n'avait pas déjà été fait lors de l'étape 100, alors, lors d'une étape 124, le récepteur calcule avec le module 18 l'identifiant STB-ID à partir des informations mémorisées dans la mémoire 20 et notamment à partir des identifiants 32, 34, 36, du numéro de série 38 et de l'adresse MAC 40. L'identifiant STB-ID calculé est mémorisé dans la mémoire 26.

Puis lors de l'étape 126, le générateur 24 génère une paire de clés privée/publique K_{STB-priv}/K_{STB-pub} et l'enregistre également dans la mémoire 26. La paire de clés K_{STB-priv}/K_{STB-pub} est générée en initialisant le générateur pseudo-aléatoire 25 à l'aide de l'identifiant STB-ID calculé. Ainsi, même si deux codes d'activation identiques sont saisis dans deux récepteurs identiques, les paires de clés privée/publique générées sont différentes puisque les identifiants de chacun de ces récepteurs sont différents. Ceci permet d'empêcher l'utilisation de deux récepteurs raccordés en parallèle sur la prise 48 et activés à l'aide du même code d'activation.

Une fois l'activation hors ligne terminée, une phase 128 d'activation en ligne est exécutée.

Au début de la phase 128, lors d'une étape 130, le récepteur 10 se connecte à la tête de réseau 4 par l'intermédiaire de la boucle locale 52 et du réseau 8 en utilisant l'adresse IP qui lui a été affectée par le fournisseur d'accès Internet 60.

Ensuite, lors d'une étape 132, le récepteur 10 chiffre à l'aide de la clé publique K_{TDR-pub} la concaténation du code d'activation acquis lors de l'étape 118 et de la clé publique K_{STB-pub} générée lors de l'étape 124.

Le code d'activation et la clé publique K_{STB-pub} ainsi chiffrés sont inclus dans une requête d'activation que le récepteur 10 envoie, lors d'une étape 134, à la tête de réseau 8 en utilisant la connexion établie lors de l'étape 130. Cette requête d'activation contient également l'identifiant STB-ID et l'adresse IP du récepteur..

Lorsque la tête de réseau 4 reçoit cette requête d'activation, elle vérifie, lors d'une étape 136, que l'identifiant STB-ID contenu dans cette requête correspond à l'un de ceux enregistrés dans la base de données 84. Si ce n'est pas le cas, lors d'une étape 138, le procédé s'arrête au motif que la tête de réseau 4 ne reconnaît pas ce récepteur comme concernant l'opérateur.

Si l'identifiant STB-ID appartient effectivement à la base de données 84, le module d'authentification 78 exécute une étape 139 d'authentification du récepteur 10. Au début de l'étape 139, lors d'une opération 140, le module 78 extrait de la requête d'activation l'adresse IP du récepteur 10. Ensuite, toujours lors de l'opération 140, le module 78 envoie cette adresse IP au serveur de localisation 66 afin d'obtenir l'identifiant LINE-ID de la boucle locale à l'extrémité de laquelle le récepteur 10 est réellement raccordé. En réponse, lors d'une opération 142, le serveur 66 envoie au module 78 l'identifiant LINE-ID correspondant à l'adresse IP reçue. Lors de l'opération 142, par exemple, le serveur 66 détermine d'abord le numéro de téléphone correspondant à l'adresse IP reçue à l'aide de la base de données 64 puis, dans un second temps, détermine l'identifiant LINE-ID correspondant au numéro de téléphone à partir de la base de données 68.

Ensuite, lors d'une opération 144, le module 78 déchiffre à l'aide de la clé privée K_{TDR-priv} le code d'activation et la clé publique K_{STB-pub} inclus dans la requête d'activation.

A cet instant, lors d'une opération 146, le module 78 vérifie que l'identifiant LINE-ID obtenu lors de l'opération 142 correspond bien à l'identifiant LINE-ID acquis lors de l'étape 108. Pour cela, puisque chaque code d'activation est unique et est attribué à un seul identifiant LINE-ID à l'étape 112, lors de l'opération 146, le module 78 compare les deux codes d'activation suivants :
- le code d'activation contenu dans la requête d'activation, et
- le code d'activation associé dans la base de données 86 au champ « LINE-ID » contenant l'identifiant LINE-ID envoyé par le serveur 66 lors de l'opération 142.

Le récepteur 10 est correctement identifié uniquement en cas de correspondance entre ces deux codes d'activation.

Dans l'affirmative, le module 78 compare également, lors d'une étape 148, l'identifiant STB-ID contenu dans la requête d'activation au contenu du champ « STB-ID » associé dans la base de données 86 au champ « LINE-ID » contenant l'identifiant LINE-ID obtenu lors de l'opération 142.

Dans le cas d'un récepteur nominatif; le champ « STB-ID » a été chargé à l'étape 108 ; dans ce cas le module 78 vérifie que l'identifiant STB-ID de la requête est égal au contenu du champ « STB-ID ».

Dans le cas d'un récepteur non nominatif, le champ « STB-ID » a été laissé vide à l'étape 108 ; le module 78 charge alors l'identifiant STB-ID de la requête dans le champ « STB-ID » et considère que la comparaison de l'identifiant du récepteur est positive.

Si le résultat de l'étape 148 est positif, lors d'une étape 150, le module 78 enregistre dans la base de données 86 la clé K_{STB-pub} dans le champ- « K_{STB-pub} » associé au champ « LINE-ID » contenant l'identifiant LINE-ID. Lors de l'étape 150, le module 78 efface également le code d'activation enregistré dans le champ associé au champ « LINE-ID » contenant l'identifiant LINE-ID, de manière à ce que ce code d'activation ne puisse être utilisé qu'une seule fois. A l'issue de l'étape 150, le récepteur 10 est maintenant activé.

Si lors de l'opération 146, il est établi que l'identifiant LINE-ID obtenu auprès du serveur 66 ne correspond pas à l'identifiant LINE-ID acquis lors de l'étape 108, ou si lors de l'étape 148, il est établi que l'identifiant STB-ID contenu dans la requête d'activation ne correspond pas à celui associé à l'identifiant LINE-ID dans la base de données 86, alors, lors d'une étape 152, le procédé s'arrête et le récepteur 10 n'est pas activé. En particulier, la clé K_{STB-pub} n'est pas enregistrée dans le champ « K_{STB-pub} » associé à l'identifiant LINE-ID obtenu lors de l'opération 142.

Une fois que le récepteur 10 a été activé, on procède alors à une phase 160 de construction d'une clé de session Kₛ.

Au début de cette phase 160, lors d'une étape 162, le récepteur 10 génère un nombre aléatoire ALEA_STB. Puis, lors d'une étape 164, le récepteur 10 chiffre le nombre ALEA_STB à l'aide de la clé publique K_{TDR-pub}.

Ensuite, lors d'une étape 166, le nombre ALEA_STB ainsi chiffré et l'identifiant STB-ID sont envoyés au serveur d'établissement de clé 72 par l'intermédiaire de la boucle locale 52.

Lorsque le serveur 72 reçoit ces informations, lors d'une étape 168, il vérifie que l'identifiant STB-ID reçu appartient bien à la base de données 86. Dans le cas contraire, le procédé s'arrête lors d'une étape 170.

Dans l'affirmative, le module d'authentification 78 procède à une étape 172 d'authentification du récepteur 10.

Au début de l'étape 172, lors d'une opération 174, le module 78 détermine l'adresse IP d'où provient le message reçu et l'envoie au serveur de localisation 66 afin d'obtenir l'identifiant LINE-ID de la boucle locale à l'extrémité de laquelle le récepteur 10 est réellement raccordé. En réponse, lors d'une opération 176, le serveur 66 recherche dans les bases de données 64 et 68 quel est l'identifiant LINE-ID associé à cette adresse IP.

Le serveur 66 envoie au module 78, lors d'une opération 178, l'identifiant LINE-ID correspondant à l'adresse IP envoyée lors de l'opération 174.

Ensuite, lors d'une opération 180, le module 78 vérifie que l'identifiant obtenu lors de l'opération 178 correspond à l'identifiant LINE-ID acquis lors de l'étape 108. Plus précisément, le module 78 compare, lors de l'opération 180, les deux identifiants de boucles locales suivants :
- l'identifiant LINE-ID envoyé par le serveur 66 lors de l'étape 178, et
- l'identifiant LINE-ID contenu dans le champ « ZINE-ID » associé à l'identifiant STB-ID dans la base de données 86.

Dans le cas où ces deux identifiants de boucles locales correspondent, alors le récepteur est correctement authentifié. Le serveur 72 procède alors à une étape 182 lors de laquelle il vérifie que la valeur de l'indicateur «session en cours » associé à l'identifiant STB-ID dans la base de données 86 n'a pas la valeur « vrai ». Dans l'affirmative, lors d'une étape 184, le serveur 72 inscrit la valeur « vrai » dans l'indicateur « session en cours » associé à l'identifiant STB-ID reçu.

Dans le cas où, lors de l'étape 180, l'identifiant LINE-ID envoyé par le serveur 66 ne correspond pas à l'identifiant LINE-ID enregistré dans la base de données 86 ou si, lors de l'étape 182, la valeur de l'indicateur « session en cours » est déjà égale à « vrai », alors le procédé s'arrête, lors d'une étape 186. Ainsi, lors de l'étape 186, aucune clé de session n'est construite.

A l'issue de l'étape 184, lors d'une étape 188, le serveur 72 déchiffre le nombre ALEA_STB chiffré reçu à l'aide de la clé privée K_{TDR-priv}.

Après, lors d'une étape 190, le serveur 72 tire un nombre aléatoire ALEA_TDR.

A l'issue des étapes 188 et 190, lors d'une étape 192, la clé Kₛ est calculée en combinant les nombres aléatoires ALEA_STB et ALEA_TDR. Par exemple, une opération XOR (ou exclusif) est réalisée entre les bits de ces deux nombres aléatoires.

Ensuite, lors d'une étape 194, le nombre ALEA__TDR est chiffré à l'aide de la clé K_{STB-pub} associée à l'identifiant STB-ID reçu dans la base de données 86.

Le nombre ALEA_STB est également chiffré, lors d'une étape 196, à l'aide de la clé de session Kₛ calculée lors de l'étape 192.

Lors d'une étape 198, les informations chiffrées lors des étapes 194 et 196 sont transmises au récepteur 10 par l'intermédiaire du réseau 8 et de la boucle locale 52.

Lors d'une étape 200, le récepteur déchiffre alors le nombre ALEA_TDR à l'aide de la clé privée K_{STB-priv}, puis, lors d'une étape 202, il calcule la clé de session Kₛ à l'aide du nombre ALEA_STB tirée lors de l'étape 162 et du nombre ALEA_TDR déchiffré lors de l'étape 200. Le calcul réalisé lors de l'étape 202 est identique à celui réalisé lors de l'étape 192, de sorte que les clés de session Kₛ construites par le serveur 72 et le récepteur 10 sont identiques.

Lors d'une étape 204, le récepteur 10 déchiffre le nombre ALEA_STB envoyé lors de l'étape 198 à l'aide de la clé de session Kₛ construite lors de l'étape 202.

Ensuite, lors d'une étape 206, le récepteur 10 compare le nombre ALEA_STB déchiffré lors de l'étape 204 à celui généré lors de l'étape 162. Dans le cas où ces nombres ALEA_STB ne correspondent pas, le procédé s'arrête lors d'une étape 208 et le désembrouillage des signaux multimédias reçus par le récepteur 10 est inhibé. Par exemple, lors de l'étape 208, la clé de session Kₛ construite est effacée.

Dans le cas contraire, lors d'une étape 210, le récepteur chiffre le nombre ALEA_TDR déchiffré lors de l'étape 200 à l'aide de la clé de session Kₛ calculée lors de l'étape 202.

Le nombre ALEA_TDR ainsi chiffré est envoyé, lors d'une étape 212, par l'intermédiaire de la boucle locale 52 et du réseau 8 à la tête de réseau 4.

Après avoir reçu le nombre ALEA_TDR chiffré, le serveur 72 déchiffre, lors d'une étape 214, ce cryptogramme à l'aide de la clé de session Kₐ calculée lors de l'étape 192.

Ensuite, lors d'une étape 216, le serveur 72 compare le nombre ALEA_TDR déchiffré lors de l'étape 214 avec celui généré lors de l'étape 190. Dans le cas où ces nombres aléatoires ne correspondent pas, le procédé s'arrête lors d'une étape 218. L'étape 218 est, par exemple, identique à l'étape 208.

Dans le cas contraire, la phase 160 s'achève avec succès, c'est-à-dire qu'une clé de session Kₛ commune à la tête de réseau 4 et au récepteur 10 a été construite.

En cas de succès de la phase 160, il est maintenant procédé à une phase 230 de transmission de signaux multimédias embrouillés de la tête de réseau 4 vers le récepteur 10.

Au début de la phase 230, lors d'une étape 232, l'embrouilleur 74 embrouille les signaux multimédias à l'aide d'un mot de contrôle CW.

Puis, lors d'une étape 234, le module 76 chiffre le mot de contrôle CW à l'aide de la clé Kₛ ou chiffre un message ECM contenant la clé CW à l'aide de la clé Kₛ. Une fois les étapes 232 et 234 achevées, l'émetteur 70 envoie, lors d'une étape 236, les signaux embrouillés et le message ECM au récepteur 10 par l'intermédiaire du réseau 8 et de la boucle locale 52.

Lors d'une étape 238, le récepteur 10 reçoit ces signaux et déchiffre le message ECM et/ou le mot de contrôle à l'aide de la clé Kₛ.

Le mot de contrôle ainsi déchiffré est ensuite utilisé lors d'une étape 240, par le désembrouilleur 14 pour désembrouiller les signaux multimédias reçus par l'intermédiaire de la boucle locale 52.

Enfin, lors d'une étape 242, les signaux multimédias désembrouillés sont décodés puis affichés en clair par le dispositif 12.

La phase de construction d'une clé de session et la phase de transmission de signaux multimédias sont réitérées lors de chaque connexion du récepteur 10 à la tête de réseau 4. Typiquement, les phases d'activation 116 et 128 ne sont exécutées qu'une seule fois, lors d'une mise en service initiale du récepteur 10.

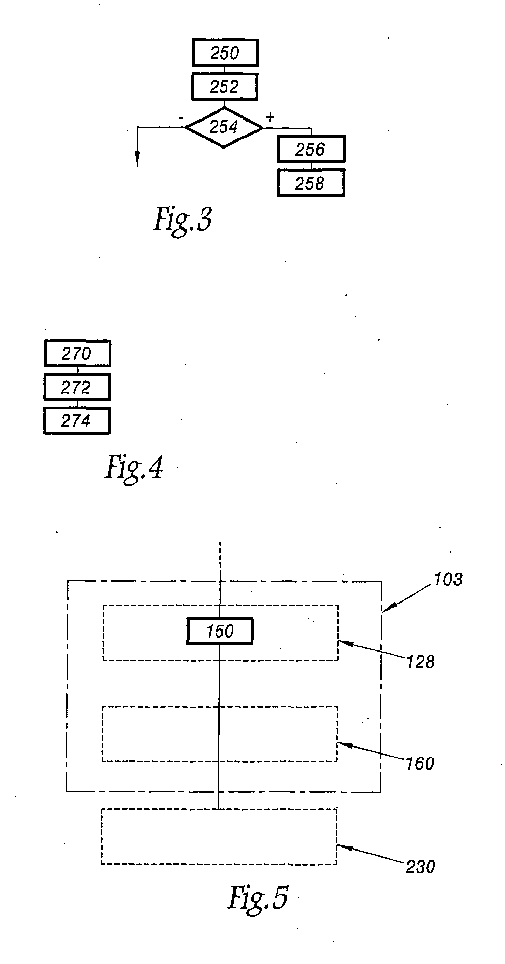

La figure 3 représente un procédé de révocation d'un récepteur qui peut être combiné au procédé des figures 2A et 2B.

Initialement, le serveur 70 acquiert, lors d'une étape 250, le numéro de série d'un récepteur à révoquer. Un récepteur doit être révoqué, par exemple, si celui-ci a été volé.

A partir de ce numéro de série, le module 80 calcule l'identifiant STB-ID correspondant puis, lors d'une étape 252, le serveur 72 enregistre la valeur « vrai » dans l'indicateur « récepteur révoqué » associé à l'identifiant STB-ID calculé dans la base de données 86.

Ensuite, le procédé de la figure 2A (respectivement 2B) est modifié de manière à ce que à chaque fois que le récepteur 10 tente de se connecter à la tête de réseau 4, le serveur 72 procède, lors de l'étape 148 et/ou 182, à une opération de vérification 254, lors de laquelle il est vérifié si la valeur « vrai » est contenue dans l'indicateur « récepteur révoqué » associé à l'identifiant STB-ID du récepteur qui tente de se connecter à la tête de réseau 4.

Dans l'affirmative, lors d'une étape 256, le serveur 72 envoie alors en réponse une requête de révocation au récepteur 10 par l'intermédiaire du réseau 8 et de la boucle locale 52. On comprend qu'ainsi la révocation d'un récepteur se fait à l'initiative de l'opérateur et à l'insu de l'utilisateur du récepteur.

Lorsque le récepteur 10 reçoit cette requête de révocation, lors d'une étape 258, il procède à l'effacement de tous les secrets nécessaires au fonctionnement du récepteur 10 et notamment à l'effacement de la paire de clés K_{STB-pub/}K_{STB-priv}. Dès lors, la phase de construction d'une clé de session ne peut plus être mise en oeuvre de sorte que le récepteur 10 ne peut plus désembrouiller les signaux multimédias embrouillés qu'il pourrait recevoir.

Dans le cas où la valeur enregistrée dans l'indicateur « récepteur révoqué » est différente de « vrai » alors le procédé se déroule comme décrit en regard de la figure 2A par l'étape 150 (respectivement figure 2B étape 184).

La figure 4 représente un procédé de révocation d'une boucle locale qui peut être implémenté en modifiant légèrement le procédé des figures 2A et 2B.

Initialement, lors d'une étape 270, la tête de réseau 4 acquiert l'identifiant LINE-ID de la boucle locale à révoquer.

Ensuite, lors d'une étape 272, le serveur 70 enregistre la valeur « vrai » dans l'indicateur « boucle locale révoquée » associé à l'identifiant LINE-ID acquis, lors de l'étape 270, dans la base de données 86.

Ensuite, lors d'une étape 274, à partir de l'identifiant LINE-ID acquis lors de l'étape 270, le serveur 72 récupère les identifiants STB-ID de chacun des récepteurs associés à cette boucle locale et procède à la révocation de chacun de ces récepteurs conformément, par exemple, au procédé de la figure 3.

De nombreux modes de réalisation du système 2 et du procédé des figures 2A et 2B sont possibles. Par exemple, dans le cas des récepteurs non nominatifs, la base de données 84 n'est pas nécessaire et l'étape 136 consistant à vérifier que l'identifiant STB-ID reçu par la tête de réseau appartient à la base de données 84 est supprimée.

L'étape 172 peut être supprimée de sorte que une fois activé, un récepteur peut être utilisé pour désembrouiller les signaux multimédias embrouillés même si celui-ci est raccordé à une autre boucle locale que celle identifiée à la phase d'abonnement 104 lors de la phase d'activation en ligne.

L'étape 182 peut également être supprimée, ce qui permet d'établir simultanément plusieurs sessions avec la tête de réseau 4.

Dans le cas où le numéro de série ou un identifiant du récepteur 10 est transmis lors de la phase d'abonnement, le procédé de la figure 2 peut être adapté pour ne pas utiliser de code d'activation. Par exemple, l'identifiant STB_ID contenu dans la requête d'activation est utilisé en lieu et place du code d'activation pour établir la correspondance entre les identifiants acquis lors de l'étape 108 et obtenus lors de l'étape 142. Dans ce cas là, l'interface homme/machine 44 peut être omise, la phase 116 est supprimée et les étapes 132, 144 et 146 sont adaptées en conséquence.

L'identifiant STB-ID peut être enregistré dans la mémoire 26 ou dans la mémoire 20 sous forme chiffrée à l'aide d'une clé commune à l'ensemble des récepteurs de l'opérateur de la tête de réseau 4.

Le système 2 a été décrit dans le cas particulier où la technologie utilisée pour transmettre des signaux multimédias embrouillés de la tête de réseau 4 vers le récepteur 10 est une technologie dite de la famille xDSL (Digital Subscriber Line). Toutefois en variante, d'autres réseaux de télécommunication peuvent être utilisés à condition qu'il soit possible d'identifier la boucle locale réellement utilisée par le récepteur 10 pour se connecter à la tête de réseau 4 à partir d'équipements du réseau connectés à l'extrémité opposée à celle à laquelle est connecté le récepteur utilisé. Dans le système 2, les équipements du réseau utilisés à cette fin sont le fournisseur d'accès 60 et le serveur de localisation 66. Toutefois, en variante, le multiplexeur 54 peut être modifié de manière à insérer automatiquement dans chaque message transmis du récepteur 10 vers la tête de réseau 4 l'identifiant LINE-ID de la boucle locale 52.

Le procédé des figures 2A et 2B peut également être modifié conformément à la figure 5 pour utiliser des certificats cryptographiques des clés publiques K_{TDR-pub} et K_{STB-pub}. Sur la figure 5 seules les étapes modifiées par rapport au procédé des figures 2A et 2B sont représentées.

Dans cette variante, chaque récepteur contient en plus une clé publique K_{AC-pub} d'une autorité de certification, typiquement dans un certificat cryptographique C_{AC} fabriqué à l'aide de la clé privée K_{AC-priv} correspondant à la clé publique K_{AC-pub}. Lors de l'activation en ligne, lorsqu'à l'étape 134 le récepteur transmet la clé publique K_{STB-pub}, il demande également qu'un certificat C_{STB} de cette clé publique soit établi par la tête de réseau. Ce certificat C_{STB} est uniquement établi si le récepteur 10 est correctement authentifié tel qu'à l'issue des étapes 139 et 148. Lors de l'étape 150, la tête de réseau transmet en outre la clé K_{STB-pub} à une autorité de certification qui construit le certificat C_{STB} de la clé K_{STB-pub} signé à l'aide de la clé privée K_{AC-priv} et le certificat C_{STB} ainsi construit est alors envoyé au récepteur. Ensuite, lors de la phase 160, la clé de session Ks est construite. Pour construire cette clé, des protocoles existants permettant de réaliser une authentification mutuelle avec échange de certificats peuvent être utilisés. A titre d'exemple, le protocole SSL (Secure Sockets Layer) peut être utilisé. Un tel protocole peut être adapté pour vérifier en outre l'identifiant STB-ID du récepteur comme à l'étape 168, l'identifiant LINE-ID de la boucle locale de l'utilisateur comme à l'étape 180 et/ou l'existence d'une session en cours comme à l'étape 182.

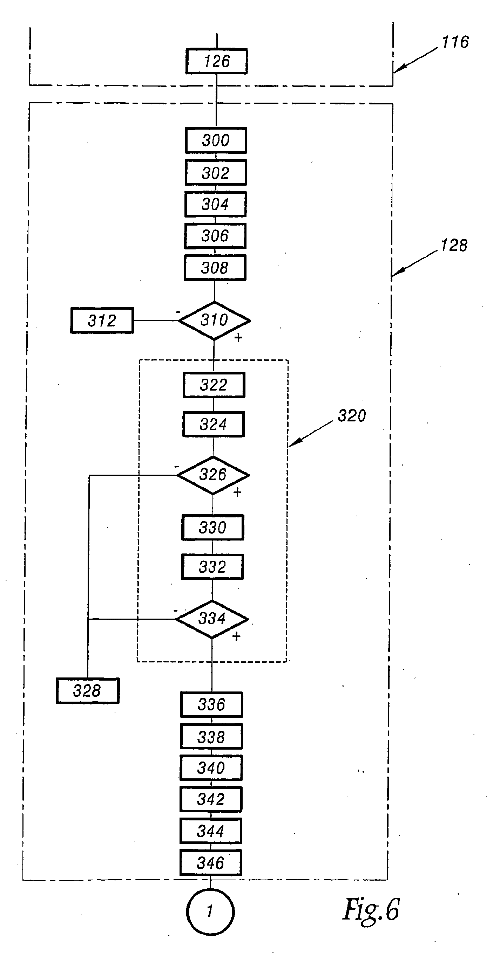

Le procédé des figures 2A et 2B peut également être modifié conformément à la figure 6 pour que la paire de clés du récepteur K_{STB-priv}/K_{STB-pub} ne soit pas générée dans le récepteur mais dans la tête de réseau.

Dans cette variante, l'activation hors ligne 116 décrite dans la figure 2A ne comprend pas l'étape 126 de génération de la paire de clés K_{STB-priv}/K_{STB-pub} par le récepteur, et la phase d'activation en ligne 128 est alors modifiée comme suit.

Au début de la phase d'activation en ligne 128, lors d'une étape 300, le récepteur 10 calcule une clé secrète, dite clé d'activation, par exemple à partir de l'identifiant STB-ID, du code d'activation acquis lors de l'étape 118 et d'une valeur aléatoire générée par le récepteur. Lors d'une étape 302, le récepteur chiffre le code d'activation avec la clé d'activation obtenue.

Puis, lors d'une étape 304, le récepteur 10 se connecte à la tête de réseau 4 par l'intermédiaire de la boucle locale 52 et du réseau 8 en utilisant l'adresse IP qui lui a été affectée par le fournisseur d'accès Internet 60. Lors de cette connexion, si la clé publique de la tête de réseau K_{Tdr-pub} n'a pas été préchargée dans la mémoire 20 du récepteur, celui-ci peut recevoir cette clé, par exemple dans un certificat auto-signé.

Lors d'une étape 306, le récepteur chiffre avec la clé K_{Tdr-pub} la concaténation de la valeur aléatoire générée à l'étape 300 et du cryptogramme du code d'activation généré à l'étape 302. Le cryptogramme ainsi obtenu est inclus dans une requête d'activation que le récepteur 10 envoie, lors d'une étape 308, à la tête de réseau 8 en utilisant la connexion établie lors de l'étape 304. Cette requête d'activation contient également l'identifiant STB-ID et l'adresse IP du récepteur.

Lorsque la tête de réseau 4 reçoit cette requête d'activation, elle vérifie, lors d'une opération 310, que l'identifiant STB-ID contenu dans cette requête correspond à l'un de ceux enregistrés dans la base de données 84. Si ce n'est pas le cas, lors d'une étape 312, le procédé s'arrête au motif que la tête de réseau 4 ne reconnaît pas ce récepteur comme concernant l'opérateur.

Si l'identifiant STB-ID appartient effectivement à la base de données 84, le module d'authentification 78 exécute une étape 320 d'authentification du récepteur 10. Au début de l'étape 320, lors d'une opération 322, le module 78 obtient l'identifiant LINE-ID du récepteur en faisant appel au serveur de localisation 66 comme dans les étapes 140, 142 et 144 décrites précédemment.

Ensuite, lors d'une opération 324, le module 78 obtient, par déchiffrement à l'aide de la clé privée K_{TDR-priv}, la valeur aléatoire et le cryptogramme inclus dans la requête d'activation.

A cet instant, lors d'une opération 326, le module 78 recherche dans la base 86 un identifiant LINE-ID acquis lors de l'étape 108 correspondant à l'identifiant LINE-ID obtenu lors de l'opération 322 et vérifie que l'identifiant STB-ID associé à cet identifiant LINE-ID dans la base 86 correspond bien à l'identifiant STB-ID envoyé dans la requête d'activation à l'étape 308. Dans le cas d'un récepteur non nominatif, le champ « STB-ID » est vide et le résultat de cette opération est considéré comme positif.

Si le résultat de l'opération 326 est positif, la tête de réseau calcule dans une étape 330 une clé secrète à partir de la valeur aléatoire déchiffrée lors de l'étape 324, de l'identifiant STB-ID et du code d'activation associés à l'identifiant LINE-ID dans la base 86, selon la même méthode utilisée par le récepteur à l'étape 300 pour calculer la clé d'activation. Lors d'une étape 332 la tête de réseau déchiffre avec cette clé secrète le code d'activation.

Puis, lors d'une opération 334, le module 78 compare les deux codes d'activation suivants :
- le code d'activation provenant de la requête d'activation et déchiffré à l'étape 332, et
- le code d'activation associé dans la base de données 86 au champ « LINE-ID » contenant l'identifiant LINE-ID envoyé par le serveur 66 lors de l'opération 322.

Le récepteur 10 est correctement identifié uniquement en cas de correspondance entre ces deux codes d'activation.

Si le résultat de l'étape 334 est positif, lors d'une étape 336, dans le cas d'un récepteur non nominatif, le module 78 charge l'identifiant STB-ID de la requête dans le champ « STB-ID » associé à l'identifiant LINE-ID.

Ensuite, lors d'une étape 338, le module 78 génère une paire de clés privée/publique K_{STB-prib}/K_{STB-pub} et un certificat de la clé publique K_{STB-pub}. En outre, cette paire de clés générées est enregistrée dans la base de données 86 dans le champ « K_{STB} » associé au champ « LINE-ID » contenant l'identifiant LINE-ID.

Puis, lors d'une étape 340, la tête de réseau chiffre la clé privée K_{STB-priv} avec la clé secrète obtenue à l'étape 332. De ce qui précède, on comprend que, ici, la clé secrète est identique à la clé d'activation du récepteur. Le cryptogramme ainsi obtenu de la clé K_{STB-priv} et le certificat de la clé K_{STB-pub} sont alors envoyés au récepteur lors d'une étape 342. A l'étape 344 le récepteur déchiffre avec la clé d'activation la clé privée K_{STB-priv} reçue et la stocke dans la mémoire 26. En outre, si la vérification du certificat reçu est positive, il extrait la clé publique K_{STB-pub} et la stocke dans la mémoire 26. Le récepteur dispose alors de sa paire de clés privée/publique K_{STB-prib}/K_{STB-pub}.

Enfin, lors de l'étape 346, le module 78 efface le code d'activation enregistré dans le champ associé au champ « LINE-ID » contenant l'identifiant LINE-ID, de manière à ce que ce code d'activation ne puisse être utilisé qu'une seule fois. A l'issue de l'étape 346, le récepteur 10 est maintenant activé.

Si lors de l'opération 326, il est établi que l'identifiant STB-ID reçu dans la requête d'activation ne correspond pas à l'identifiant STB-ID associé à l'identifiant LINE-ID dans la base 86, ou si lors de l'étape 334, il est établi que le code d'activation contenu dans la requête d'activation ne correspond pas à celui associé à l'identifiant LINE-ID dans la base de données 86, alors, lors d'une étape 328, le procédé s'arrête et le récepteur 10 n'est pas activé. En particulier, le récepteur ne reçoit pas les clés K_{STB-pub}/K_{STB-priv} nécessaires à la suite des échanges avec la tête de réseau. Le reste du procédé de la figure 6 est, par exemple, identique à celui des figures 2A et 2B.

Dans une autre variante du procédé de la figure 2A, le code d'activation n'est pas transmis à l'abonné pour être saisi sur le récepteur par l'utilisateur mais il est généré par le récepteur lors de l'étape d'activation hors ligne 116. Dans cette variante la tête de réseau et le récepteur disposent du même algorithme secret pour générer le code d'activation qui ne comprend pas d'élément aléatoire mais uniquement des paramètres propres au récepteur. Ces paramètres sont connus à la fois de la tête de réseau et du récepteur. Par exemple, l'un des paramètres est un identifiant du récepteur tel que l'identifiant STB-ID. Ces paramètres sont générés et enregistrés dans le récepteur lors de sa fabrication. L'étape 144 d'envoi du code d'activation à l'utilisateur est supprimée. Lors de la phase d'activation hors ligne 116, à l'étape 118, le récepteur 10 génère son code d'activation selon l'algorithme secret et l'opération 120 de vérification du code saisi par l'utilisateur est supprimée. Cette variante évite la mise en place d'une logistique particulière pour communiquer à l'utilisateur ce code d'activation ainsi que de la fonction de dialogue associée sur le récepteur.

## Revendications

1. Procédé d'établissement d'une clé cryptographique de session commune à une tête de réseau transmettant des signaux multimédias embrouillés et à un récepteur de ces signaux multimédias embrouillés, ce récepteur étant apte à désembrouiller les signaux reçus à l'aide d'un mot de contrôle, la tête de réseau et le récepteur étant raccordés l'un à l'autre par l'intermédiaire d'un réseau de télécommunication dans lequel chaque boucle locale est identifiée de façon unique parmi l'ensemble des boucles locales par un identifiant de boucle locale, le récepteur pouvant être raccordé à l'extrémité de l'une quelconque des boucles locales du réseau, ce procédé comportant :
- une étape (139, 172) d'authentification du récepteur, et
- une phase (160) de construction de la clé de session, cette phase étant complètement exécutée uniquement si le récepteur a été correctement authentifié lors de l'étape d'authentification,
**caractérisé en ce que**- le procédé comporte une phase préalable d'abonnement (104) lors de laquelle un identifiant de la boucle locale à l'extrémité de laquelle le récepteur doit être raccordé est acquis, à partir d'informations fournies par un utilisateur souhaitant s'abonner,
et en ce que l'étape d'authentification comporte :
a) lors d'une connexion du récepteur à la tête de réseau par l'intermédiaire du réseau, une opération (142, 178) d'obtention automatique de l'identifiant de la boucle locale à l'extrémité de laquelle le récepteur est réellement raccordé pour établir cette connexion à la tête de réseau, à partir d'informations fournies par au moins un équipement du réseau raccordé à l'extrémité de la boucle locale opposée à celle à laquelle est raccordé le récepteur, et
b) une opération (146, 180) de vérification que l'identifiant obtenu lors de l'opération a) correspond à l'identifiant acquis lors de la phase d'abonnement afin d'authentifier le récepteur.

2. Procédé selon la revendication 1, **caractérisé en ce que** les opérations a) et b) sont réitérées lors de chaque connexion du récepteur à la tête de réseau.

3. Procédé selon l'une quelconque des revendications précédentes, **caractérisé**
- **en ce que** lors de la phase d'abonnement, la tête de réseau génère (en 110) un code d'activation unique qui est associé (en 112) dans la tête de réseau à l'identifiant acquis lors de la phase d'abonnement,
- **en ce que** avant l'opération b), le récepteur dispose (en 118) du code d'activation,
- **en ce que** lors de l'établissement d'une connexion avec la tête de réseau, le récepteur transmet (en 134) le code d'activation dont il dispose à la tête de réseau par l'intermédiaire du réseau, et
- **en ce que** lors de l'opération b) la tête de réseau utilise le code d'activation reçu pour établir la correspondance entre l'identifiant acquis lors de la phase d'abonnement et l'identifiant de boucle locale obtenu lors de l'opération a).

4. Procédé selon la revendication 3, **caractérisé en ce que** le code d'activation est généré par la tête de réseau et transmis au client, et **en ce que** le récepteur acquiert ce code d'activation par l'intermédiaire d'une interface homme/machine.

5. Procédé selon la revendication 3, **caractérisé en ce que** avant l'étape b) la tête de réseau et le terminal génèrent indépendamment l'un de l'autre les codes d'activation uniquement à partir d'au moins un identifiant du terminal connu à la fois du terminal et de la tête de réseau.

6. Procédé selon l'une quelconque des revendications 1 à 3, **caractérisé en ce que** avant la phase de construction de la clé, le procédé comporte :
- une phase (116, 128) d'activation lors de laquelle soit le récepteur génère (en 124) à l'aide d'un générateur aléatoire ou pseudo-aléatoire une paire de clés publique/privée K_{STB-pub}/K_{STB-priv} puis envoie uniquement la clé publique à la tête de réseau, soit la tête de réseau génère (en 338) à l'aide d'un générateur aléatoire ou pseudo-aléatoire une paire de clés publique/privée K_{STB-pub}/K_{STB-priv} puis envoie cette paire de clés au récepteur, et ensuite,
- lors de la phase (160) de construction, la tête de réseau transmet au récepteur par l'intermédiaire du réseau des secrets chiffrés à l'aide de la clé publique K_{STB-pub} et le récepteur déchiffre ces secrets à l'aide de la clé privée K_{STB-priv}, ces secrets échangés entre la tête de réseau et le récepteur permettant d'établir la clé de session.

7. Procédé selon la revendication 6, pour des récepteurs équipés au moins d'un identifiant unique (32 à 40), **caractérisé en ce que** le générateur aléatoire ou pseudo-aléatoire est initialisé en outre à partir d'un identifiant unique du récepteur.

8. Procédé selon l'une des revendications 6 ou 7, **caractérisé en ce que**, lors de la phase d'activation, au moins un certificat cryptographique de la clé publique K_{STB-pub} est créé puis utilisé, et **en ce que** la création du certificat cryptographique de la clé K_{STB-pub} est soumis à la condition.que l'opération b) soit réussie.

9. Procédé selon l'une quelconque des revendications précédentes, **caractérisé en ce que** l'équipement du réseau fournissant lesdites informations est un serveur de localisation propre à partir d'une adresse IP (Internet Protocol) affectée au récepteur pour se connecter à la tête de réseau à retrouver l'identifiant de la boucle locale à l'extrémité de laquelle le récepteur est réellement raccordé pour établir la connexion.

10. Récepteur apte à établir une clé de session avec une tête de réseau en mettant en oeuvre un procédé conforme à la revendication 4, **caractérisé en ce que** le récepteur comporte une interface homme/machine (44) et **en ce que** le récepteur est apte à acquérir par l'intermédiaire de cette interface homme/machine le code d'activation et à transmettre ce code d'activation acquis à la tête de réseau par l'intermédiaire du réseau et un identifiant du récepteur calculépar le récepteur étant associé à l'identifiant de la boucle locale pour établir une correspondance entre l'identifiant acquis lors d'une phase d'abonnement et l'identifiant de la boucle locale par la tête de réseau.

11. Récepteur apte à établir une clé de session avec une tête de réseau en mettant en oeuvre un procédé conforme à la revendication 5, **caractérisé en ce que** ce récepteur est apte à générer indépendamment de la tête de réseau un code d'activation uniquement à partir d'un identifiant du récepteur connu à la fois du récepteur et de la tête de réseau et à transmettre ce code d'activation à la tête de réseau par l'intermédiaire du réseau et un identifiant du récepteur calculépar le récepteur étant associé à l'identifiant de la boucle locale pour établir une correspondance entre l'identifiant acquis lors d'une phase d'abonnement et l'identifiant de la boucle locale par la tête de réseau.

12. Récepteur selon la revendication 10 ou 11, ce récepteur étant apte à établir une clé de session avec une tête de réseau en mettant en oeuvre un procédé conforme à la revendication 6, **caractérisé en ce que** le générateur de clé (24) comporte un générateur (25) aléatoire ou pseudo-aléatoire propre à générer la paire de clés publique/privée, et **en ce.que** le récepteur est uniquement apte à envoyer la clé publique à la tête de réseau.

13. Récepteur selon la revendication 12 apte à établir une clé de session avec une tête de réseau en mettant en oeuvre un procédé conforme à la revendication 7, dans lequel le récepteur comporte un identifiant unique et le générateur est initialisable à partir de cet identifiant unique du récepteur.

14. Tête de réseau apte à transmettre des signaux multimédias embrouillés et à établir une clé de session avec un récepteur de ces signaux multimédias embrouillés en mettant en oeuvre un procédé conforme à l'une quelconque des revendications 1 à 9, **caractérisée en ce que** lors d'une connexion du récepteur à la tête de réseau par l'intermédiaire du réseau, la tête de réseau est apte à obtenir automatiquement l'identifiant de la boucle locale à l'extrémité de laquelle le récepteur est réellement raccordé pour établir cette connexion, à partir d'informations fournies par au moins un équipement du réseau raccordé à l'extrémité de la boucle locale opposée à celle à laquelle est raccordé le récepteur, et la tête de réseau est apte à vérifier que l'identifiant obtenu correspond à l'identifiant acquis lors de la phase d'abonnement afin d'authentifier le récepteur.

15. Tête de réseau selon la revendication 14, apte à établir une clé de session en mettant en oeuvre un procédé conforme à la revendication 2, dans lequel la tête de réseau est apte à obtenir l'identifiant de boucle locale et à vérifier que l'identifiant obtenu correspond à l'identifiant acquis lors de la phase d'abonnement à chaque connexion du récepteur à la tête de réseau.

16. Tête de réseau selon la revendication 14 ou 15, apte à établir une clé de session avec le récepteur en mettant en oeuvre un procédé conforme à l'une quelconque des revendications 3 à 5, dans laquelle la tête de réseau est apte à utiliser le code d'activation reçu pour établir la correspondance entre l'identifiant acquis lors de la phase d'abonnement et l'identifiant de boucle locale obtenu.

17. Procédé de transmission de signaux multimédias embrouillés entre une tête de réseau et un récepteur de ces signaux multimédias embrouillés, le récepteur étant apte à désembrouiller les signaux reçus à l'aide d'un mot de contrôle, la tête de réseau et le récepteur étant raccordés l'un à l'autre par l'intermédiaire d'un réseau de télécommunication dans lequel chaque boucle locale est identifiée de façon unique parmi l'ensemble des boucles locales par un identifiant de boucle locale, le récepteur pouvant être raccordé à l'extrémité de l'une quelconque des boucles locales du réseau, **caractérisé en ce que** ce procédé comporte :
- une procédure (103) d'établissement d'une clé de session conforme au procédé selon l'une quelconque des revendications 1 à 9, et
- une étape (234) de chiffrement du mot de contrôle ou d'un message contenant le mot de contrôle, à l'aide de la clé de session établie, avant sa transmission de la tête de réseau vers le récepteur par l'intermédiaire du réseau.

## Claims

1. A method of establishing a cryptographic session key which is common to a network head which transmits scrambled multimedia signals and to a receiver of said scrambled multimedia signals, said receiver being capable of unscrambling the signals received by means of a check word, the network head and the receiver being connected to one another by means of a telecommunications network, in which each local loop is uniquely identified within the set of local loops by a local loop identifier, the receiver being connectable to the end of any one of the local loops of the network, said method comprising:
- a receiver authentication step (139, 172), and
- a session key construction phase (160), said phase being executed in full only if the receiver has been correctly authenticated during the authentication step, **characterised in that** the method comprises a prior subscription phase (104) during which an identifier for the local loop, to the end of which the receiver is to be connected, is acquired on the basis of items of information supplied by a user who wishes to subscribe,
and **in that** the authentication step comprises:
a) at the time of connection of the receiver to the network head by means of the network, an operation (142, 178) for automatically obtaining the identifier for the local loop, to the end of which the receiver is actually connected in order to establish said connection to the network head, from items of information supplied by at least one item of network equipment connected to the opposite end of the local loop from the end to which the receiver is connected, and
b) an operation (146, 180) for verifying that the identifier obtained during operation a) corresponds to the identifier acquired during the subscription phase in order to authenticate the receiver.

2. A method according to claim 1, **characterised in that** operations a) and b) are repeated each time the receiver is connected to the network head.

3. A method according to either one of the preceding claims, **characterised**
- **in that**, during the subscription phase, the network head generates (at 110) a unique activation code which is associated (at 112), in the network head, with the identifier acquired during the subscription phase,
- **in that**, prior to operation b), the activation code is available to the receiver (at 118),
- **in that**, when a connection is established with the network head, the receiver transmits (at 134) the activation code which it has available to the network head by means of the network and,
- **in that**, during operation b), the network head uses the activation code received to establish a correspondence between the identifier acquired during the subscription phase and the local loop identifier obtained during operation a).

4. A method according to claim 3, **characterised in that** the activation code is generated by the network head and transmitted to the client, and **in that** the receiver acquires this activation code by means of a human/machine interface.

5. A method according to claim 3, **characterised in that**, prior to step b), the network head and the terminal, independently of one another other, generate the activation codes solely on the basis of at least one terminal identifier known by both the terminal and the network head.

6. A method according to any one of claims 1 to 3, **characterised in that**, prior to the key construction phase, the method comprises:
- an activation phase (116, 128), during which either the receiver generates (at 124), by means of a random or pseudo-random generator, a pair of public/private keys K_{STB-pub}/K_{STB-priv}, then sends only the public key to the network head, or the network head generates (at 338), by means of a random or pseudo-random generator, a pair of public/private keys K_{STB-pub/}K_{STB-priv}, then sends said pair of keys to the receiver and, then,
- during the construction phase (160), the network head transmits to the receiver by means of the network secrets which are encrypted by means of the public key K_{STB-pub} and the receiver decrypts said secrets by means of the private key K_{STB-priv}, said secrets which are exchanged between the network head and the receiver allowing the session key to be established.

7. A method according to claim 6, for receivers provided at least with a unique identifier (32 to 40), **characterised in that** the random or pseudo-random generator is further initialised on the basis of a unique identifier of the receiver.

8. A method according to one of claim 6 or claim 7, **characterised in that**, during the activation phase, at least one cryptographic certificate of the public key K_{STB-pub} is created then used, and **in that** the creation of the cryptographic certificate of the key K_{STB-pub} is subject to the condition that operation b) is successful.

9. A method according to any one of the preceding claims, **characterised in that** the item of network equipment providing said items of information is a location server which, on the basis of an IP (Internet Protocol) address allocated to the receiver in order to connect to the network head, is capable of locating the identifier for the local loop, to the end of which the receiver is actually connected to establish the connection.

10. A receiver capable of establishing a session key with a network head by implementing a method according to claim 4, **characterised in that** the receiver comprises a human/machine interface (44) and **in that** the receiver is capable of acquiring the activation code by means of said human/machine interface and transmitting said acquired activation code to the network head by means of the network and an identifier of the receiver calculated by the receiver being associated with the identifier of the local loop to establish a correspondence between the identifier acquired during the subscription phase and the identifier of the local loop by the network head.

11. A receiver capable of establishing a session key with a network head by implementing a method according to claim 5, **characterised in that** said receiver is capable, independently of the network head, of generating an activation code solely on the basis of an identifier of the receiver known by both the receiver and the network head and of transmitting said activation code to the network head by means of the network and an identifier of the receiver calculated by the receiver being associated with the identifier of the local loop to establish a correspondence between the identifier acquired during a subscription phase and the identifier of the local loop by the network head.

12. A receiver according to claim 10 or claim 11, said receiver being capable of establishing a session key with a network head by implementing a method according to claim 6, **characterised in that** the key generator (24) comprises a random or pseudo-random generator (25) capable of generating the pair of public/private keys, and **in that** the receiver is solely capable of sending the public key to the network head.

13. A receiver according to claim 12 capable of establishing a session key with a network head by implementing a method according to claim 7, in which the receiver comprises a unique identifier and the generator may be initialised on the basis of said unique identifier of the receiver.

14. A network head capable of transmitting scrambled multimedia signals and establishing a session key with a receiver of said scrambled multimedia signals by implementing a method according to any one of claims 1 to 9, **characterised in that**, at the time of connection of the receiver to the network head by means of the network, the network head is capable of automatically obtaining the identifier of the local loop, to the end of which the receiver is actually connected to establish said connection, on the basis of items of information supplied by at least one item of network equipment connected to the opposite end of the local loop from that to which the receiver is connected, and the network head is capable of verifying that the identifier obtained corresponds to the identifier acquired during the subscription phase in order to authenticate the receiver.

15. A network head according to claim 14, which is capable of establishing a session key by implementing a method according to claim 2, in which the network head is capable of obtaining the local loop identifier and verifying that the identifier obtained corresponds to the identifier acquired during the subscription phase each time the receiver is connected to the network head.

16. A network head according to claim 14 or claim 15, which is capable of establishing a session key with the receiver by implementing a method according to any one of claims 3 to 5, in which the network head is capable of using the activation code received to establish a correspondence between the identifier acquired during the subscription phase and the local loop identifier obtained.

17. A method of transmitting scrambled multimedia signals between a network head and a receiver of said scrambled multimedia signals, the receiver being capable of unscrambling the signals received by means of a check word, the network head and the receiver being connected to one another by means of a telecommunications network, in which each local loop is uniquely identified within the set of local loops by a local loop identifier, the receiver being connectable to the end of any one of the local loops of the network, **characterised in that** this method comprises:
- a procedure (103) for establishing a session key according to the method according to any one of claims 1 to 9, and
- a step (234) of encrypting the check word or a message containing the check word, by means of the established session key, prior to transmission thereof from the network head to the receiver by means of the network.

## Patentansprüche

1. Verfahren zum Erstellen eines kryptographischen Sitzungsschlüssels, der einem Netzwerkkopf, der verwürfelte Multimedia-Signale übermittelt, und einem Empfänger, der die verwürfelten Multimedia-Signale empfängt, gemeinsam ist, wobei der Empfänger zum Entwürfeln der empfangenen Signale mit Hilfe eines Kontrollwortes geeignet ist, wobei der Netzwerkkopf und der Empfänger über ein Telekommunikationsnetz miteinander verbunden sind, in dem jede lokale Schleife aus der Gesamtheit der lokalen Schleifen mittels eines Lokale-Schleife-Identifizierers eindeutig identifiziert wird, wobei der Empfänger mit dem Ende einer beliebigen der lokalen Schleifen des Netzwerks verbunden sein kann, wobei das Verfahren aufweist:
- einen Schritt (139, 172) des Authentifizierens des Empfängers, und
- eine Phase (160) des Bildens des Sitzungsschlüssels, wobei die Phase ausschließlich dann vollständig ausgeführt wird, wenn der Empfänger während des Authentifizierungsschrittes korrekt authentifiziert wurde,
**dadurch gekennzeichnet, dass** das Verfahren eine vorausgehende Anmeldephase (104) aufweist, während der ein Identifizierer der lokalen Schleife erfasst wird, mit deren Ende der Empfänger verbunden werden muss, ausgehend von Informationen, die von einem Benutzer bereitgestellt werden, der sich anzumelden wünscht,
und dass der Schritt des Authentifizierens aufweist:
a) bei einer Verbindung des Empfängers mit dem Netzwerkkopf über das Netzwerk einen Vorgang (142, 178) des automatischen Erhaltens des Identifizierers der lokalen Schleife, mit deren Ende der Empfänger tatsächlich verbunden ist, zum Herstellen der Verbindung mit dem Netzwerkkopf, ausgehend von Informationen, die von mindestens einer Einrichtung des Netzwerks bereitgestellt werden, die mit dem Ende der lokalen Schleife entgegengesetzt zu demjenigen verbunden ist, mit dem der Empfänger verbunden ist, und
b) einen Vorgang (146, 180) des Verifizierens, dass der bei dem Vorgang a) erhaltene Identifizierer dem während der Anmeldephase erfassten Identifizierer entspricht, zum Authentifizieren des Empfängers.

2. Verfahren gemäß Anspruch 1, **dadurch gekennzeichnet, dass** die Vorgänge a) und b) bei jeder Verbindung des Empfängers mit dem Netzwerkkopf wiederholt werden.

3. Verfahren gemäß einem der vorhergehenden Ansprüche, **dadurch gekennzeichnet,**
- **dass** während der Anmeldephase der Netzwerkkopf (in 110) einen einzigartigen Aktivierungscode erzeugt, der (in 112) in dem Netzwerkkopf mit dem während der Anmeldephase erfassten Identifizierer verknüpft wird,
- **dass** der Empfänger (in 118) den Aktivierungscode vor dem Vorgang b) aufweist,
- **dass** während der Herstellung einer Verbindung mit dem Netzwerkkopf der Empfänger (in 134) den Aktivierungscode, den er aufweist, über das Netzwerk an den Netzwerkkopf übermittelt, und
- **dass** während des Vorgangs b) der Netzwerkkopf den empfangenen Aktivierungscode zum Herstellen der Verbindung zwischen dem während der Anmeldephase erfassten Identifizierer und dem während des Vorgangs a) erhaltenen Lokale-Schleife-Identifizierer verwendet.

4. Verfahren gemäß Anspruch 3, **dadurch gekennzeichnet, dass** der Aktivierungscode von dem Netzwerkkopf erzeugt und an den Benutzer übertragen wird, und dass der Empfänger den Aktivierungscode mittels einer Mensch/Maschine-Schnittstelle erfasst.

5. Verfahren gemäß Anspruch 3, **dadurch gekennzeichnet, dass** vor dem Schritt b) der Netzwerkkopf und das Endgerät unabhängig voneinander die Aktivierungscodes ausschließlich ausgehend von mindestens einem Identifizierer des Endgerätes erzeugen, der gleichzeitig dem Endgerät und dem Netzwerkkopf bekannt ist.

6. Verfahren gemäß einem der Ansprüche 1 bis 3, **dadurch gekennzeichnet dass** das Verfahren vor der Phase des Bildens des Schlüssels aufweist:
- eine Aktivierungsphase (116, 128), während der entweder der Empfänger mit Hilfe eines Zufalls- oder Pseudozufallsgenerators (in 124) ein öffentlich/privat-Schlüsselpaar K_{STB-pub/}K_{STB-priv} erzeugt und anschließend ausschließlich den öffentlichen Schlüssel an den Netzwerkkopf sendet, oder der Netzwerkkopf (in 338) mit Hilfe eines Zufalls- oder Pseudozufallsgenerators ein öffentlich/privat-Schlüsselpaar K_{STS-pub}/K_{STB-priv} erzeugt und dieses Schlüsselpaar anschließend an den Empfänger sendet, und anschließend,
- während der Phase des Bildens (160) der Netzwerkkopf über das Netzwerk mit Hilfe des öffentlichen Schlüssels K_{STB-pub} verschlüsselte Geheiminformationen an den Empfänger übermittelt und der Empfänger die Geheiminformationen mit Hilfe des privaten Schlüssels K_{STB-priv} entschlüsselt, wobei die zwischen dem Netzwerkkopf und dem Empfänger ausgetauschten Geheiminformationen das Erstellen des Sitzungsschlüssels ermöglichen.

7. Verfahren gemäß Anspruch 6 für Empfänger, die mit mindestens einem einzigartigen Identifizierer (32 bis 40) ausgestattet sind, **dadurch gekennzeichnet, dass** der Zufalls- oder Pseudozufallsgenerator ferner ausgehend von einem einzigartigen Identifizierer des Empfängers initialisiert wird.

8. Verfahren gemäß einem der Ansprüche 6 oder 7, **dadurch gekennzeichnet, dass** während der Aktivierungsphase mindestens ein kryptographisches Zertifikat des öffentlichen Schlüssels K_{STB-pub} erzeugt und anschließend verwendet wird, und dass das Erzeugen des kryptographischen Zertifikats des Schlüssels K_{STB-pub} der Bedingung unterworfen ist, dass der Vorgang b) erfolgreich ist.

9. Verfahren gemäß einem der vorhergehenden Ansprüche, **dadurch gekennzeichnet, dass** die Einrichtung des Netzwerks, die die Informationen bereitstellt, ein Lokalisierungsserver ist, der ausgehend von einer IP-Adresse (IP, Internet Protocol [Internetprotokoll]), die dem Empfänger zum Verbinden mit dem Netzwerkkopf zugewiesen wird, geeignet ist zum Wiedererkennen des Identifizierers der lokalen Schleife, mit deren Ende der Empfänger tatsächlich verbunden ist, zum Herstellen der Verbindung.

10. Empfänger, der zum Erstellen eines Sitzungsschlüssels mit einem Netzwerkkopf mittels des Durchführens eines Verfahrens gemäß Anspruch 4 geeignet ist, **dadurch gekennzeichnet, dass** der Empfänger eine Mensch/Maschine-Schnittstelle (44) aufweist und der Empfänger zum Erfassen des Aktivierungscodes mittels der Mensch/Maschine-Schnittstelle und zum Übermitteln des erfassten Aktivierungscodes über das Netzwerk an den Netzwerkkopf geeignet ist, und wobei ein Identifizierer des Empfängers, der von dem Empfänger berechnet wird, mit dem Identifizierer der lokalen Schleife verknüpft wird zum Herstellen einer Verbindung zwischen dem während einer Anmeldephase erfassten Empfänger und dem Identifizierer der lokalen Schleife mittels des Netzwerkkopfes.

11. Empfänger, der zum Erstellen eines Sitzungsschlüssels mit einem Netzwerkkopf mittels des Durchführens eines Verfahrens gemäß Anspruch 5 geeignet ist, **dadurch gekennzeichnet, dass** der Empfänger zum Erzeugen eines Aktivierungscodes unabhängig von dem Netzwerkkopf ausschließlich ausgehend von einem Identifizierer, der sowohl dem Empfänger als auch dem Netzwerkkopf bekannt ist, und zum Übermitteln des Aktivierungscodes über das Netzwerk an den Netzwerkkopf geeignet ist, und wobei ein Identifizierer des Empfängers, der von dem Empfänger berechnet wird, mit dem Identifizierer der lokalen Schleife verknüpft wird zum Herstellen einer Verbindung zwischen dem während einer Anmeldephase erfassten Empfänger und dem Identifizierer der lokalen Schleife mittels des Netzwerkkopfes.

12. Empfänger gemäß Anspruch 10 oder 11, wobei der Empfänger zum Erstellen eines Sitzungsschlüssels mit einem Netzwerkkopf mittels des Durchführens eines Verfahrens gemäß Anspruch 6 geeignet ist, **dadurch gekennzeichnet, dass** der Schlüsselgenerator (24) einen Zufalls- oder Pseudozufallsgenerator (25) aufweist, der zum Erzeugen des öffentlich/privat-Schlüsselpaares geeignet ist, und dass der Empfänger ausschließlich zum Senden des öffentlichen Schlüssels an den Netzwerkkopf geeignet ist.

13. Empfänger gemäß Anspruch 12, der zum Erstellen eines Sitzungsschlüssels mit einem Netzwerkkopf mittels des Durchführens eines Verfahrens gemäß Anspruch 7 geeignet ist, wobei der Empfänger einen einzigartigen Empfänger aufweist und der Generator ausgehend von dem einzigartigen Identifizierer des Empfängers initialisierbar ist.

14. Netzwerkkopf, der zum Übermitteln der verwürfelten Multimedia-Signale und zum Erstellen eines Sitzungsschlüssels mit einem Empfänger der verwürfelten Multimedia-Signale mittels des Durchführens eines Verfahrens gemäß einem der Ansprüche 1 bis 9 geeignet ist, **dadurch gekennzeichnet, dass** bei einer Verbindung des Empfängers mit dem Netzwerkkopf über das Netzwerk der Netzwerkkopf zum automatischen Erhalten des Identifizierers der lokalen Schleife geeignet ist, mit deren Ende der Empfänger tatsächlich verbunden ist, zum Herstellen der Verbindung, ausgehend von Informationen, die von mindestens einer Einrichtung des Netzwerks bereitgestellt werden, die mit dem Ende der lokalen Schleife entgegengesetzt zu demjenigen verbunden ist, mit dem der Empfänger verbunden ist, und der Netzwerkkopf geeignet ist zum Verifizieren, dass der erhaltene Identifizierer dem während der Anmeldephase erfassten Identifizierer entspricht, zum Authentifizieren des Empfängers.

15. Netzwerkkopf gemäß Anspruch 14, der zum Erstellen eines Sitzungsschlüssels mittels des Durchführens eines Verfahrens gemäß Anspruch 2 geeignet ist, wobei der Netzwerkkopf zum Erhalten des Lokale-Schleife-Identifizierers und zum Verifizieren, dass der erhaltene Identifizierer dem bei der Anmeldephase erfassten Identifizierer bei jeder Verbindung des Empfängers mit dem Netzwerkkopf entspricht, geeignet ist.

16. Netzwerkkopf gemäß Anspruch 14 oder 15, der zum Erstellen eines Sitzungsschlüssels mit dem Empfänger mittels des Durchführens eines Verfahrens gemäß einem der Ansprüche 3 bis 5 geeignet ist, wobei der Netzwerkkopf zum Verwenden des empfangenen Aktivierungscodes zum Herstellen der Verbindung zwischen dem während der Anmeldephase erfassten Identifizierer und dem erhaltenen Lokale-Schleife-Identifizierer geeignet ist.

17. Verfahren zum Übertragen von verwürfelten Multimedia-Signalen zwischen einem Netzwerkkopf und einem Empfänger der verwürfelten Multimedia-Signale, wobei der Empfänger zum Entwürfeln der empfangenen Signale mit Hilfe eine Kontrollwortes geeignet ist, wobei der Netzwerkkopf und der Empfänger über ein Telekommunikationsnetzwerk miteinander verbunden sind, in dem jede lokale Schleife aus der Gesamtheit der lokalen Schleifen mittels eines Lokale-Schleife-Identifizierers eindeutig identifiziert wird, wobei der Empfänger mit dem Ende von einer beliebigen der lokalen Schleifen des Netzwerks verbunden sein kann, **dadurch gekennzeichnet, dass** das Verfahren aufweist:
- ein Verfahren (103) zum Erstellen eines Sitzungsschlüssels entsprechend dem Verfahren gemäß einem der Ansprüche 1 bis 9, und
- einen Schritt (234) des Verschlüsselns des Kontrollwortes oder einer Nachricht, die das Kontrollwort enthält, mit Hilfe des erstellten Sitzungsschlüssels, vor dessen Übertragung von dem Netzwerkkopf an den Empfänger über das Netzwerk.
